# EUROPEAN PATENT APPLICATION

(11) **EP 4 682 792 A1**
(43) Date of publication of application: **21.01.2026**
(21) Application number: 24382783.9
(22) Date of filing: 18.07.2024
(51) Int. Cl.: G06Q 10/0631, G06Q 10/1053, G06Q 10/10, G06F 40/20, G06N 3/02, G06N 3/08, G06N 20/00, G06N 20/20

(54) **METHOD, SYSTEM AND COMPUTER PROGRAM FOR ADVANCED CANDIDATE EVALUATION AND SELECTION FOR RECRUITMENT PROCESSES**

(71) Applicant: Telefónica Innovación Digital, S.L., 28050 Madrid (ES)
(72) Inventor: Castro Vilabella, Santiago, 28050 Madrid (ES); Hernández Izquierdo, José Miguel, 28050 Madrid (ES)
(74) Representative: Carlos Hernando, Borja

(57) **Abstract**

A method, system and computer program for advanced candidate evaluation and selection for recruitment processes are proposed. The method comprises collecting data concerning a recruitment process, including job description data, candidates data, and prioritization parameters regarding specific needs of the job position, the candidates data comprising, for each candidate, personal details thereof and a record of an interview; extracting information for enhancing the recruitment process by processing the collected data using natural language, and categorizing the extracted information into different domains; generating representations of the extracted information using an embedding model; calculating a similarity measure of the generated representations by comparing them with those within a same domain using comparison techniques; computing a fit percentage of each candidate to the job position by aggregating and weighting the calculated similarities based on the one or more prioritization parameters; and ranking the candidates based on the fit percentage.

## Description

### TECHNICAL FIELD

The present invention relates to a method, system and computer program for advanced candidate evaluation and selection for recruitment processes.

### BACKGROUND OF THE INVENTION

In the modern landscape of talent acquisition and personnel selection, efficiency and accuracy in evaluating candidates are more critical than ever. Human resources (HR) departments face significant challenges in managing and processing the vast number of applications for each job position, often leading to bottlenecks. Leveraging Artificial Intelligence (Al) techniques offers an ideal solution to optimize these processes.

B. Li, et al. "Multi-Domain Feature Representation and Multi-Dimensional Feature Interaction for Person-Job Fit" uses algorithms to match job seekers with job postings, focusing on feature representations from resumes and job descriptions. It employs multi-head self-attention for feature correlation for multi-domain information, finding relationships between data of relative domains.

C. Fang, et al. "RecruitPro: A Pretrained Language Model with Skill-Aware Prompt Learning for Intelligent Recruitment" uses a skill-aware prompt pretraining framework to learn unified representations from HR data and uses this pretrained model for several downstream tasks. This backbone model improves the performance of intelligent recruitment across multiple industries by improving the features extracted from recruitment data and thus capturing better semantic information.

Despite these advances, existing solutions primarily focus on matching job seekers to job postings based on textual data, such as keywords or CVs, and structured data. They often do not account for real-time interaction data, such as transcripts from interviews. Additionally, these solutions tend to be domain-specific, making adaptation to different industries and organizations with varying cultures and languages challenging.

New methods and systems for automating and enhancing the accuracy of candidate evaluation processes are therefore needed.

### DESCRIPTION OF THE INVENTION

The object of present invention is thus to provide an advanced job candidate evaluation system that enables automating part of the recruitment process and reducing the bottlenecks in HR departments while improving overall hiring efficiency.

To that end, the present invention proposes, according to one aspect, a method for advanced candidate evaluation and selection for recruitment processes. The method comprises performing by one or more processors the following steps: collecting data related to a recruitment process for a job position, the data comprising job description data, candidates data, and one or more prioritization parameters regarding specific needs of the job position, the candidates data comprising, for each candidate, personal details of the candidate and a record of an interview previously carried out to the candidate; extracting information for enhancing the recruitment process by processing the collected data using natural language, and categorizing the extracted information into different domains; generating representations of the extracted information using an embedding model; calculating a similarity measure of the generated representations by comparing them with those within a same domain using one or more comparison techniques; computing a fit percentage of each candidate to the job position by using an aggregation model that weights the calculated similarities based on the one or more prioritization parameters; and ranking the candidates based on the computed fit percentage.

In some embodiments, the aggregation model may comprise a neural network, including a multi-layer perceptron, MLP.

In some embodiments, the method further uses the computed fit percentage with additional information related to decisions taken by human recruiters on the ranked candidates to retrain the embedding model and/or the aggregation model using reinforcement learning with human feedback. The additional information may comprise for instance whether a candidate overcomes or not an intermediate or the final phase of the recruitment process.

In some embodiments, the record comprises an audio or a video of at least part of the interview.

In some embodiments, the record further comprises a sentiment reaction of the candidate to different questions asked during the interview, including interest, confidence, nervousness, doubt, and/or indifference.

In some embodiments, the embedding model comprises bidirectional or unidirectional embedding models, including Bidirectional Encoder Representations from Transformers, BERT, and GPT.

In some embodiments, the embedding model is further trained using Self-supervised learning, SSL, techniques.

In some embodiments, the SSL techniques apply advanced anonymization techniques and/or synthetic data generation systems.

In some embodiments, the comparison techniques comprise the cosine similarity, the Euclidean distance, the Pearson correlation, and/or a Boolean logic.

In some embodiments, the method also identifies intrinsic relationships between the candidates data by means of a cross-domain model (e.g. a neural network such as a multi-layer perceptron (MLP) or a transformer-based model). In this case, an input of the cross-domain model is the generated representations. The computing step can further comprise weighting an output of the cross-domain model with the calculated similarities.

In some embodiments, the method further uses the computed fit percentage with additional information related to decisions taken by human recruiters on the ranked candidates to retrain the cross-domain model using reinforcement learning with human feedback. The additional information may comprise, for instance whether a candidate overcomes or not an intermediate or the final phase of the recruitment process.

In some embodiments, the job description comprise information about the requirements of the job and/or about a culture or values of the company.

The personal details can comprise a Curriculum Vitae or resume of the candidate. Alternatively or complementarily, the personal details can comprise a cover letter of the candidate.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present's invention design involves a modular and flexible approach, tailored to address the complexities of various recruitment processes and the diverse profiles of candidates. This approach allows for the integration of additional features to enhance invention performance. Key features includes:
- Cross-Domain Comparison:
   The use of embeddings facilitates the comparison between different features, allowing identifying correlations between different attributes, and ensuring that all relevant aspects of a candidate profile and job description are considered, leading to a more comprehensive and accurate evaluation. Different mechanisms for comparing feature embeddings across domains include:
      - Correlation between candidate answers and sentiment analysis. It allows the system to evaluate the candidate's suitability for specific soft skills.
      - Correlation between information from similar domains, such as salary expectations and experience.
      - Correlation between information from non-similar domains, finding hidden relevant aspects to make sure every bit of information is considered. Key to find candidates over skilled and to identify complementary skills that could improve the performance over the position requirements.
   The goal is to reveal hidden patterns and correlations, improving the accuracy of job-person fit assessments.
- Data Anonymization:
   Advanced anonymization techniques and synthetic data generation enhance privacy, robustness, and fairness. The system's modularity supports adding layers to enhance data privacy, crucial when dealing with personal or sensitive information.
      - Data collection/ingestion module with Anonymization layer: This removes personal information from candidate data.
      - Filtered interview record: Personal information revealed during the interview can be removed.
   This ensures no personal information reaches the feedback/training stage, enabling unbiased, ethical, and transparent person-job-fit matches without using personal information. It also prevents the embedding module from considering biased or unfair information.
- Federated Learning:
   It is expected that the models like the embedding used in the embedding stage and the cross domain model, will need a dedicated backbone that is specialized in extracting features in HR and recruitment domains. For example, it is very difficult to extract features in recruitment processes with generic and less specialized candidates, compared to processes with highly specialized applicants who are extensively trained or have long work experience.
   Backbone models used in present invention could benefit from federated learning techniques to use private data from different sources securely. It also allows cross-domain and cross-use cases training, significantly enhancing the performance of the embeddings model.
- Custom Embedding Models
   The embeddings module can face challenges when dealing with profession or industry-specific terminology. Custom embedding models ensure accurate feature extraction tailored to specific recruitment contexts.
- Sentiment and behavior analysis
   Evaluating a candidate's non-verbal communication, such as self-assurance, confidence, doubt, and insecurity, is crucial. An additional data source correlating candidates' feelings, gestures, and non-verbal insights with interview transcripts reinforces the quality of the person-job-fit model.
   Correlation can be performed in a "question by question" manner to unequivocally associate sentiment analysis insights with candidate's answers. For example: "The candidate *appears hesitant and imprecise* when asked if they have knowledge of structured programming. He finally answers it is able to program in general terms."
- Bias detection module
   Al system regulations require guarantees of unbiased design. The invention's multistage processing allows for bias controls at various stages. In addition to the control over the candidate's input data (Data Anonymization) that implements the first required level to guarantee unbiasing, the invention can incorporate additional bias detection modules within the feedback loop and anonymization phase in which the data is analyzed.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 graphically illustrates an embodiment of the proposed method for advanced candidate evaluation and selection for recruitment processes.
Fig. 2 graphically illustrates an embodiment of the feedback (training) section.
Fig. 3 graphically illustrates another embodiment of the proposed method.

### DETAILED DESCRIPTION OF THE INVENTION AND OF PREFERRED EMBODIMENTS

Present invention provides an advanced Al-driven solution for optimizing recruitment processes and maximizing the person-job fit accuracy and robustness. The invention integrates multiple data sources and processes to evaluate candidates more precisely, enhancing the accuracy and efficiency of candidate selection.

The invention improves organizational productivity by making sure that only the most suitable candidates are selected for a given job position.

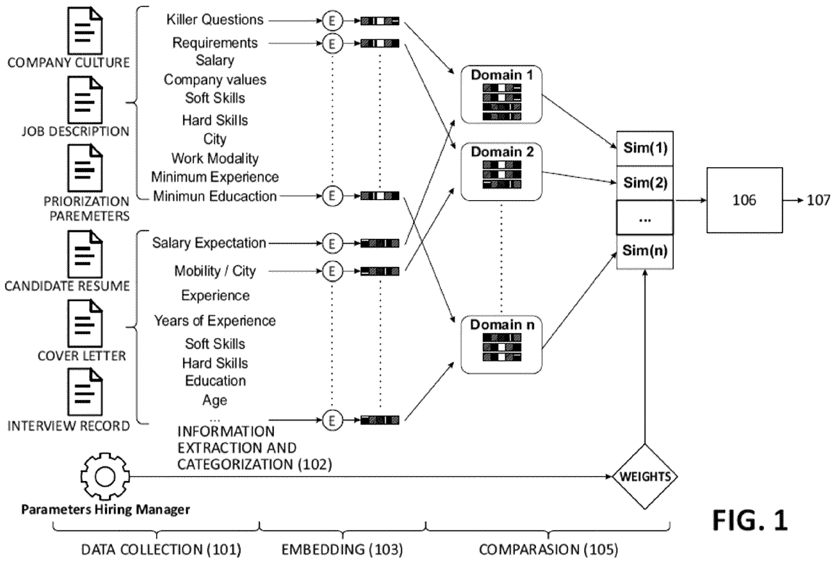

Fig. 1 schematically shows the different sections in which the present invention can be divided to evaluate candidates of a recruitment process for a job position. As seen in the figure, each section or module performs a distinct function within the evaluation process, ranging from data collection and processing to comparison and determination of the candidate's suitability for the job position.

First of all, data from at least one first interview of the recruitment process is collected (101). These data may include:
- Job description data including information about the requirements of the job, information about the culture or values of the company, etc.;
- Candidates data including a CV or resume, and (optionally) a cover letter, and a record of the first interview such as an audio or a video transcript. The record offers a rich data source, providing detailed information as well as valuable insights into the candidate's communication skills, thought processes and cultural fit, which are elements difficult to capture in CVs and cover letters.
- Hiring Manager or Prioritization parameters. Allows for the customization of the evaluation process based on the specific needs of the job position. It allows balancing the importance of candidate aptitudes to allow a better fit with the recruiter's expectations.

The collected data is processed using natural language to extract pertinent information, categorizing it into various domains (102) such as hard skills, education, experience, etc. to facilitate precise analysis and matching.

In some embodiments, the record can be further expanded by adding new information through processing the audio (and/or video if available) of the interview using a sentiment analysis module, where information about interest, confidence, nervousness, doubt, etc., is introduced in response to the different questions asked. The data derived from the sentiment analysis module will be incorporated as annotations for each question-answer pair. This approach will enable the large language model to perform a more precise categorization and mitigate hallucinations by providing it with a richer dataset.

Following, with the objective of transforming the textual information into feature vectors that capture the semantic meaning of the data, representations of the extracted information are generated by means of an embedding model (103).

Embeddings are dense numerical representation of data that capture the underlying semantic information in a vector space. These vectors are generated by machine learning models and make it possible to measure the similarity between different pieces of data by their proximity in this high dimensional space.

The embedding model may comprise bidirectional or unidirectional embedding models, such as Bidirectional Encoder Representations from Transformers (BERT) and GPT. These embedding models work by processing data through several layers of neurons. These neurons learn to represent the data in a high dimensional space where each word, sentence, or document chunk, is mapped to a point. The dimensions in this space represent different aspects of the semantic and syntactic meaning and properties of the text.

When job descriptions and candidate information are converted into embeddings, the resulting vectors reflect the underlying meaning and properties of the text. This allows for a more sophisticated comparison beyond simple keyword matching, as embeddings understand context and can recognize synonyms or related concepts. Also, the high dimensionality of the vector space allows for a detailed representation, capturing aspects and identifying correlations between different attributes.

To train the embedding model, SSL techniques can be also used. This approach will yield a robust foundational model capable of generating superior representations for more specific downstream tasks.

Then, the generated representations are collected and compared with those within the same domain (e.g., comparing expected hard skills with those of the candidate) (105). The comparison can utilize any of the following similarity functions:
- Cosine Similarity: A widely used measure for assessing semantic similarity between texts. It calculates the cosine of the angle between two vectors, where a value close to -1 indicates opposing vectors, close to 1 indicates high similarity, and close to 0 indicates no similarity. It is a measure of orientation, not magnitude, which helps to identify how similar the information in two sets of text data is, regardless of their lengths. The purpose of this measure is to identify similar information that corresponds to the same domain, identifying data both in the candidate's as well as the vacancy's information for comparison.
- Euclidean Distance: A measure used for numerical data, calculating the distance between two points in a multidimensional space. The smaller the distance, the more similar the data points are. This metric represents the similarity between numerical information such as salary expectation or years of experience.
- Pearson Correlation: Measures the correlation between the hiring manager requirements (and their respective weights) and the skills exhibited by the candidate. It differs from the cosine similarity in that it considers both the magnitude and the direction of the data, which can be useful in understanding the relationship between requirements and skills in a hiring context.

For specific information, such as salary expectations or critical questions (killer questions, that is, questions that if responded differently than required imply direct discard of the candidate), comparisons can be directly made using Boolean logic (Yes or No).

Once the similarity measures across various domains are calculated, they are aggregated and weighted based on the hiring manager's defined priorities. Additionally, if desired, the hiring manager will be able to prioritize relevant skills or information (hard skills, soft skills, salary, experience, education...), and those domains will thus have more weight for the final decision. For example, if the position requires strong communication skills and proficiency in programming languages, but the geographical location of the candidate is irrelevant, the domains corresponding to soft skills and hard skills will have more weight in the final decision that the one regarding the location.

An aggregation layer (106) is then used to convert the similarity measures into a single weighted score that indicates the (Person-Job) fit percentage (107) using an aggregation model. This phase involves assigning weights to different similarity scores according to the importance of various domains, such as hard skills, soft skills, etc., specified by the hiring managers. The weighted scores are then summed up to produce the overall fit percentage (107). This aggregated score reflects the comprehensive evaluation of a candidate across all relevant aspects, ensuring a more accurate person-job fit. The aggregation model may comprise a neural network, including a multi-layer perceptron, MLP, which starting from initial weights assigned by the hiring managers is further retrained using reinforcement learning with human feedback, that is, learning from the human feedback to the results of the model. This human feedback may involve information on whether a candidate has overcome or not an intermediate or the final phase of the recruitment process, or the recruiter's decision to promote a candidate over two with practically the same scoring, capturing the sensitivity of the recruiter and providing dynamic personalization to each selection process.

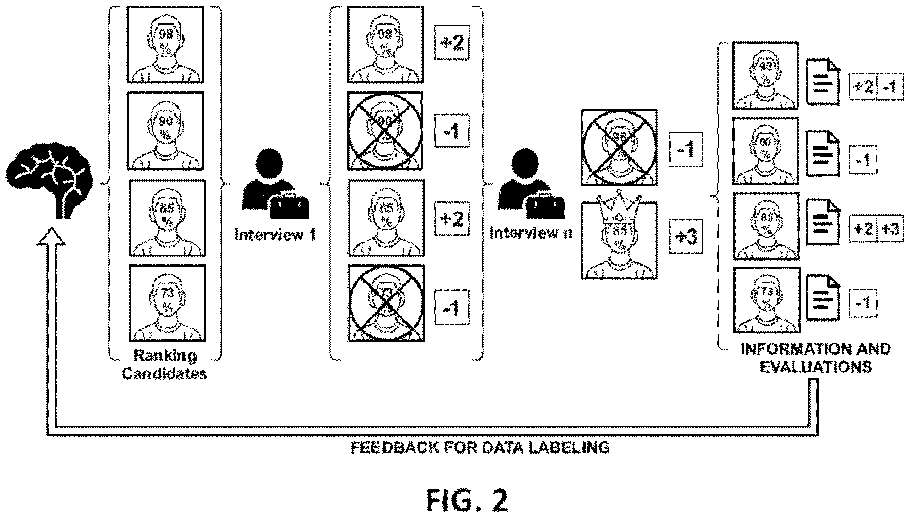

Finally, the candidates are ranked (see Fig. 2) based on the fit percentage (107).

Referring now to Fig. 2, therein an embodiment of the feedback (training) section or module is shown. This module is designed to continuously refine the system by leveraging real-world interactions and feedback, that is, to train the downstream task of computing the fit percentage. The module allows for data labeling as the tool is used in real-world scenarios. The operational pipeline for this process can be as follows:
1. Data Collection: In further interviews of the recruitment process, hiring managers and candidates interact with the system through talks, document analysis, and prioritization and decisions taken from managers. All this data is collected and anonymized to ensure no personal identifiable information is stored.
2. Data Annotation and Labeling: The collected data is automatically annotated and labeled to indicate the outcomes of the evaluations. For example, successful hires, rejected candidates in different stages of the process, and their respective evaluation score are labeled accordingly (if a candidate reaches further stages in the process, the system receives a higher score).
3. Model Update: Using SSL techniques, the system updates its backbone model. SSL enables the model to learn from the labeled data without requiring explicit human supervision. This involves training the embedding model and the downstream task model (person-job fit) on the new data to improve their accuracy and relevance.
4. Distributed Training: To address privacy concerns and ensure data security, distributed training techniques such as Federated Learning can be employed [N. Kourtellis, et al. "FLaaS: Federated Learning as a Service."]. This approach allows the model to be trained across multiple decentralized datasets without transferring the data to a central server or sharing them with other parties. Instead, model updates are aggregated securely, ensuring that the privacy of company data is maintained.
5. Continuous Improvement: The system continuously integrates new data and feedback, refining its models and improving the overall accuracy and efficiency of candidate evaluations. This iterative process ensures that the system evolves and adapts to the specific needs and patterns observed in real world recruitment scenarios.

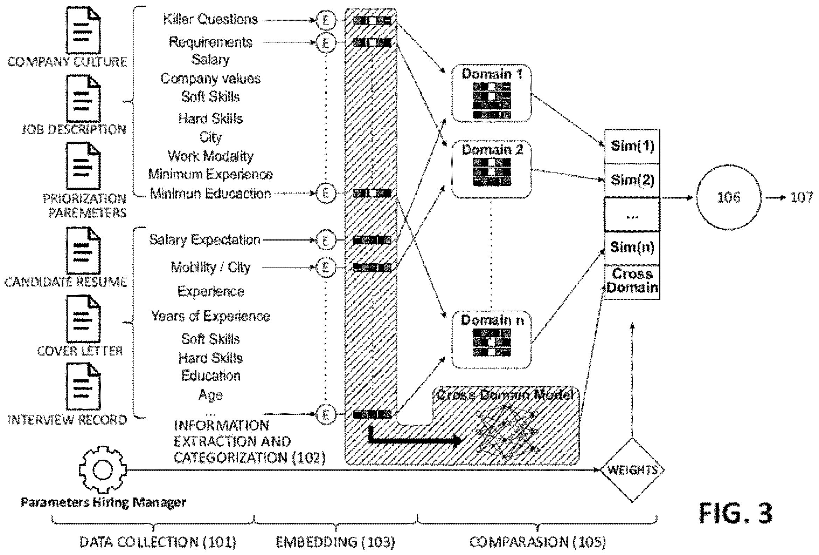

Referring to Fig. 3, in this embodiment, present invention includes a downstream task called cross-domain model, which takes the combined embeddings from different domains as input, and outputs a score for the fit percentage between the candidate's data and the job position data. It compares these combined embeddings, capturing correlations and interactions between various features across different domains. This comparison is important for understanding how different attributes interact and contribute to the overall fit.

The cross-domain model can be a neural network such as a multi-layer perceptron (MLP) or a transformer-based model, designed to handle the high dimensionality of the combined embeddings from the input data. The labelled data that results from the feedback module can be used to train and improve the model, so the result represents a more precise fit between the candidate and the job description. Finally, the score obtained is added to the rest of the similarity scores during the aggregation phase.

Some of the advantages of the invention can be summarized as follows:
- Robustness in person-job fit prediction: Unlike current methods that rely on nondeterministic procedures (such as LLMs), which result in varying outcomes for the same input and thus making it more difficult to perform consistent decision-making, the proposed system provides stable and reliable results, ensuring a more robust evaluation process. Multi-layer approach grants a fine control across the entire process, where the system could be monitored and/or adjusted when needed.
- Adaptability: The proposed system is highly adaptable, capable of ingesting a wide range of input information, including candidate resumes, cover letters, and interview transcripts. This data integration allows for a more flexible and accurate evaluation of candidates, ensuring that all relevant information is considered in the fit prediction. Furthermore, the Federated Learning approach allows the system to adapt to each specific client organization without the need of sharing the data between different users. Embedding models can then be customized to use cases, candidates' profiles and job offers.
- Enhanced Accuracy: By integrating multi-source data and advanced similarity metrics, the invention provides more precise candidate evaluations with a high degree of explainability. The unique system design allows to match different recruitment scenarios and to adapt to available data sources while maximizing the fit accuracy.
- Customization: The invention can be customized to meet the specific needs of different organizations and industries. Input data could vary as required and embedding models could be personalized as well without modifying the core architecture.
- Continuous Improvement: Similarity analysis between features and job description criteria is key to provide the best fit, so features need to be precisely extracted and determined. The feedback module ensures the system evolves with real-world interactions, maintaining high accuracy and relevance.
- Privacy Protection: Advanced data anonymization and federated learning techniques ensure the privacy and security of sensitive candidate information. The invention is agnostic regarding input information, as it focused on matching extracted features with vacancy criteria.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for advanced candidate evaluation and selection for recruitment processes, the method comprising performing by one or more processors the following steps:
collecting data related to a recruitment process for a job position, the data comprising job description data, candidates data, and one or more prioritization parameters regarding specific needs of the job position, the candidates data comprising, for each candidate, personal details of the candidate and a record of an interview previously carried out to the candidate;
extracting information for enhancing the recruitment process by processing the collected data using natural language, and categorizing the extracted information into different domains;
generating representations of the extracted information using an embedding model;
calculating a similarity measure of the generated representations by comparing them with those within a same domain using one or more comparison techniques;
computing a fit percentage of each candidate to the job position using an aggregation model that weights the calculated similarities based on the one or more prioritization parameters; and
ranking the candidates based on the computed fit percentage.

2. The method of claim 1, further comprising using the computed fit percentage with additional information related to decisions taken by human recruiters on the ranked candidates to retrain the embedding model and/or the aggregation model using reinforcement learning with human feedback, the additional information comprising a candidate overcoming or not overcoming an intermediate or a final phase of the recruitment process.

3. The method of claim 2, wherein the record further comprises an audio or a video of at least part of the interview and /or a sentiment reaction of the candidate to different questions asked during the interview, including interest, confidence, nervousness, doubt, and/or indifference.

4. The method of any one of the previous claims, wherein the embedding model comprises bidirectional or unidirectional embedding models, including Bidirectional Encoder Representations from Transformers, BERT, and GPT.

5. The method of any one of the previous claims, wherein the embedding model is further trained using Self-supervised learning, SSL, techniques.

6. The method of claim 5, wherein the SSL techniques apply advanced anonymization techniques and/or synthetic data generation systems.

7. The method of any one of the previous claims, wherein the comparison techniques comprise the cosine similarity, the Euclidean distance, the Pearson correlation, and/or a Boolean logic.

8. The method of any one of the previous claims, wherein the aggregation model comprises a neural network, including a multi-layer perceptron, MLP.

9. The method of any one of the previous claims, further comprising identifying intrinsic relationships between the candidates data by means of a cross-domain model, an input of the cross-domain model being the generated representations, wherein the aggregation model further comprises weighting an output of the cross-domain model with the calculated similarities.

10. The method of claim 9, wherein the cross-domain model comprises a neural network, including a multi-layer perceptron, MLP, or a transformer-based model.

11. The method of any one of the previous claims, wherein the job description comprise information about the requirements of the job and/or about a culture or values of the company.

12. The method of any one of the previous claims, wherein the personal details at least comprise a Curriculum Vitae or resume of the candidate.

13. A system for advanced candidate evaluation and selection for recruitment processes, comprising:
at least one memory or database to store data related to a recruitment process for a job position, the data comprising job description data, candidates data, and one or more prioritization parameters regarding specific needs of the job position, the candidates data comprising, for each candidate, personal details of the candidate and a record of an interview previously carried out to the candidate; and
one or more processors, configured to:
extract information for enhancing the recruitment process by processing the collected data using natural language, and categorize the extracted information into different domains;
generate representations of the extracted information using an embedding model;
calculate a similarity measure of the generated representations by comparing them with those within a same domain using one or more comparison techniques;
compute a fit percentage of each candidate to the job position using an aggregation model that weights the calculated similarities based on the one or more prioritization parameters; and
rank the candidates based on the computed fit percentage

14. A non-transitory computer readable medium including code instructions that when executed in a computer system implement the steps of:
collecting data related to a recruitment process for a job position, the data comprising job description data, candidates data, and one or more prioritization parameters regarding specific needs of the job position, the candidates data comprising, for each candidate, personal details of the candidate and a record of an interview previously carried out to the candidate;
extracting information for enhancing the recruitment process by processing the collected data using natural language, and categorizing the extracted information into different domains;
generating representations of the extracted information using an embedding model;
calculating a similarity measure of the generated representations by comparing them with those within a same domain using one or more comparison techniques;
computing a fit percentage of each candidate to the job position using and aggregation model that weights the calculated similarities based on the one or more prioritization parameters; and
ranking the candidates based on the computed fit percentage.

15. The non-transitory computer readable medium of claim 14, wherein:
the record comprises an audio or a video of at least part of the interview, and wherein the record further comprises a sentiment reaction of the candidate to different questions asked during the interview, including interest, confidence, nervousness, doubt, and/or indifference; and/or
the code instructions further identify intrinsic relationships between the candidates data by means of executing a cross-domain model, an input of the cross-domain model being the generated representations, wherein the aggregation model further weights an output of the cross-domain model with the calculated similarities.
